# EUROPEAN PATENT APPLICATION

(11) **EP 4 451 192 A1**
(43) Date of publication of application: **23.10.2024**
(21) Application number: 23020191.5
(22) Date of filing: 20.04.2023
(51) Int. Cl.: G06Q 20/06, G06Q 20/10, G06Q 20/22, G06Q 20/36, G06Q 20/38

(54) **SECURE TRANSACTION UNIT, TOKEN REFERENCE REGISTER, ELECTRONIC PAYMENT TRANSACTION SYSTEM AND METHOD FOR REGISTERING OF TOKEN**

(71) Applicant: Giesecke+Devrient advance52 GmbH, 81677 München (DE)
(72) Inventor: Hupel, Lars, 81677 München (DE)
(74) Representative: Giesecke+Devrient IP

(57) **Abstract**

The invention relates to a secure transaction unit (TU) for managing payment transactions in an electronic payment transaction system (TS), the secure transaction unit (TU) comprising: means for receiving and transmitting one or more tokens (T) to one or more other secure transaction unit (TU) in the electronic payment transaction system (TS) to cause an exchange of the one or more tokens (T) between secure transaction units (TU) in the electronic transaction system (TS), wherein each token (T) comprises at least a monetary value (v) and a private key (r) of a token-individual key pair; means for transmitting one or more registration requests (RR) to a token reference register (T-Reg) of the electronic transaction system (TS), wherein each registration request (RR) comprises one or more token references (TR) to be stored in the token reference register (T-Reg), each token reference (TR) being uniquely assigned to a token (T) in the electronic payment transaction system (TS); wherein one or more token references (TR) of a registration request (RR) comprises the monetary value (v) of the assigned token (T), a reference, preferably a public key (R) corresponding to the private key (r) of the token-individual key pair, and a transaction unit group identifier (TUGI) as token reference elements. The invention also relates to a token reference register. The invention also relates to an electronic transaction system in particular an electronic payment transaction system. The invention also relates to a method for registering tokens in a token reference register.

## Description

The invention relates to a secure transaction unit. The invention also relates to a token reference register. The invention also relates to an electronic transaction system in particular an electronic payment transaction system. The invention also relates to a method for registering tokens in a token reference register.

Tokens - also referred to as digital assets, electronic coins, coin data sets - may represent any digital asset, in particular a digital currency, preferably a central bank digital currency, short CBDC. These tokens are issued and deleted by an issuing unit of the payment transaction system, such as an issuing authority, or a central bank unit or a commercial bank unit, hereinafter also referred to as secure token issuing unit.

Electronic token transactions and/or storage of tokens and any associated transaction data and/or storage data in an electronic payment transaction system must be safe and secure and so, means for protecting confidentiality, integrity, and availability of exchanged and/or stored token data must be implemented. This is especially true for electronic payment transactions and associated payment transactions and payment storages in which a monetary value is linked with each token.

There are different technical approaches for a digital asset such as CBDC, issued by a central bank.

According to a first approach, tokens are merely cryptographically secured by the central bank unit and the cryptographically secured tokens are exchanged directly between token transaction units - also referred to as secure wallets and/or secure elements - of the participants in the electronic payment system in an encrypted manner. The exchanged token may also be stored in an encrypted manner. The token transaction units can verify the authenticity of the tokens based on the cryptographic security, such as keys and signatures, and for example checks a certificate from the central bank and/or the other token transaction units for validity within the certificate hierarchy in advance via online access or following the offline protocol of the system.

According to a second approach, tokens are stored in a centralized or decentralized blockchain/distributed ledger of the payment transaction system, e.g., organized by a central bank unit. For a payment transaction, an ownership of a token record changes in the blockchain for which a lot of information (sender/recipient/amount) is required and/or even published. Sender and recipient of the token need an online access to the blockchain at the time of the transaction.

According to a favorable third approach as for instance described in WO 2020 / 212 331 A1 tokens are stored in a local token management unit (also called wallet or payment application unit or secure element) to be exchanged between participants of an electronic payment transaction system. The transferred token can validly be used after receipt from another participant without a need of approval or verification via an online connection. So, if an online connection is not available or inconvenient or should not be used for a specific token transaction, it remains possible to validly transfer tokens directly between participants in the electronic payment transaction system. For security-, verification- and registration-purposes, a token reference register stores token references of all valid tokens without knowing the tokens itself. So, the user can check validity of a received token. The token reference register only stores token references of the corresponding token. Tokens can be further modified by each participant of the payment transaction system. Participants may replace registered token references by new token references. The overall monetary value in the token reference register will not change upon replacement. Accordingly, a registered token may be switched to a new token (SWITCH request), a token may be split into new tokens (SPLIT request) or multiple tokens may be merged into a new token (MERGE request).

The electronic payment transaction system according to the third approach may comprise a plurality of transaction units, each being assigned to a specific participant in the electronic payment transaction system. There may be a plurality of transaction unit issuer, e.g., commercial bank units. There may be a plurality of transaction unit operator.

It should be possible that a transaction error can be resolved without reducing anonymity. It should also be possible that a destroyed or malfunctioned transaction unit can be recovered without reducing anonymity. However, safety and confidentiality must be assured at any times to avoid attacks, such as double-spending of tokens and/or spending tokens with fraud-generated (not in real existing) monetary values.

The above-identified objectives are solved with the features of the independent patent claims. Further advantageous embodiments are described in the dependent patent claims.

In an aspect of the present invention there is provided a secure transaction unit for managing payment transactions in an electronic payment transaction system.

The secure transaction unit comprises means for receiving and transmitting one or more tokens to one or more other secure transaction unit in the electronic payment transaction system to cause an exchange of the one or more tokens between secure transaction units in the electronic transaction system. Each token comprises at least a monetary value and a private key of a token-individual key pair as token elements.

The exchange may be a direct exchange of token between the transaction units, e.g. physical sending the tokens from one transaction unit to another transaction unit.

The exchange may be alternatively be an indirect exchange of token between the transaction units, e.g. by assigning token references from one transaction unit to another transaction unit without physical transfer of the tokens itself.

The secure transaction unit further comprises means for transmitting one or more registration requests to a token reference register of the electronic transaction system, wherein each registration request comprises one or more token references to be stored in the token reference register. The registration requests are also referred to as replacement requests and are used to register modifications of the token in the token reference register.

Each token reference is uniquely assigned to a token.

The token reference is a set of data to be stored in the token reference register to register the tokens and further to resolve transaction errors or detect a fraud.

One or more token references of a registration request comprise the monetary value of the assigned token, a reference, which is preferably a public key corresponding to the private key of the token-individual key pair, and a transaction unit group identifier as token reference elements. The reference is used as the data element in the token reference to register the token in the electronic payment transaction system. In addition, the transaction unit group identifier and the monetary value of the token reference - also stored as token reference data elements in the token register - are used for recovery of tokens residing or managed by a destroyed or malfunctioning transaction unit as well as resolving transaction errors without reducing anonymity.

With this concept, a token reference can have a token reference element being a transaction unit group identifier. With this transaction unit group identifier, the one or more secure transaction units in the electronic payment transaction system can be identified. The transaction unit group identifier may also be referred to as transaction-unit-origin information.

The transaction unit group identifier may also be referred to as transaction-unit-issuer information.

The transaction unit group identifier may preferably be referred to as transaction-unit-operator information.

The transaction unit group identifier may be an information for uniquely identifying an issuer of the secure transaction unit (TU) and/or a specific (financial) service provider unit of a plurality of (financial) service provider units in the electronic payment transaction system. The service provider unit issued the secure transaction unit and/or tokens.

The transaction unit group identifier may additionally or alternatively be an information for uniquely identifying a specific (financial) service provider unit of a plurality of (financial) service provider units in the electronic payment transaction system, wherein the service provider unit operates the secure transaction unit and may preferably be a financial technologies (fintech) company.

So, with this transaction unit group identifier it is possible to differentiate between secure transaction units issued or operated by different service provider units, each for instance being a transaction unit issuer unit or a transaction unit operating unit, e.g., different financial service provider units.

The transaction unit group identifier may be a transaction unit identifier of the transaction unit of the service provider unit, such as a service provider unit wallet ID. The transaction unit group identifier may be any suitable identifier of the service provider unit.

The transaction unit group identifier as token reference element is not a currency data, because the currency used for different secure transaction units may be identical and so, the currency data may not provide sufficient information to distinguish between the different secure transaction units.

The transaction unit group identifier as token reference element is not a pseudonym of the participant or the transaction unit of the electronic transaction system.

The transaction unit group identifier as token reference element is not an identifier of the participant of the payment transaction system to whom the secure transaction unit is assigned to.

The transaction unit group identifier as token reference element is not an identifier of a token issuer.

The transaction unit group identifier is not a token element, so the tokens used for payment transactions in the electronic payment transaction system remain the same. However, for registering the tokens, the token reference is enhanced with the transaction unit group identifier as a new token reference element.

The transaction unit group identifier may be used as an element within the reference, e.g. the public key, to protocol the transaction that was made with this transaction unit.

The transaction unit group identifier may be ignored by the token reference register when registering the token by storing the token reference.

The registration request may have input token references that do not have transaction unit group identifier and may have output token references to which the transaction unit inserts the transaction unit group identifier as another element for protocolling the payment transaction in the event of a destroyed or malfunctioned or a stolen transaction unit.

The token may be an asset token. The token may be a currency token. The token may be a central bank issued token, such as a CBDC. The token may be a digital currency token from other commercial issuers.

With this secure transaction unit, the registering of token references remains an anonymous process, because the token reference register does not obtain information about the owner of the token, e.g., the sender or receiver of the individual token. In contrast, only a group identifier is part of the token reference, which does not carry any information about an individual secure transaction unit of the sender or receiver of a token exchange, e.g., a payment transaction.

The control means is configured to generate one or more of the token references of a registration request to be transmitted to the token reference register, wherein during generation, the control means is further configured to insert the transaction unit group identifier into one of the token references generated by the secure transaction unit. So, the transaction unit group identifier as an additional token reference element is inserted by the secure transaction itself.

Inserting the transaction unit group identifier means that the control means is configured to add this transaction unit group identifier (data) to the token reference elements of the specific token reference.

It may be that the transaction unit group identifier is inserted into one of the token references generated by the secure transaction unit. So, at least one token reference in the token register contains the transaction unit group identifier as the further token reference element.

It may be that the transaction unit group identifier is inserted into each of the token references generated by the secure transaction unit. So, all token reference of this particular transaction unit contains the transaction unit group identifier as the further token reference element and so, these token references are identified as being generated by this transaction unit.

A registration request may contain token references with transaction unit group identifier and without transaction unit group identifier, e.g. to reduce the number of data for transferring the token reference to the token reference register.

It may be that the transaction unit group identifier is inserted into each of the token references of a specific registration request generated by the secure transaction unit. Alternatively, the registration request may contain transaction unit group identifier in each token reference.

It may be that the transaction unit group identifier is inserted into each token reference of a plurality of registration requests, preferably a sequence of registration requests, generated by the secure transaction unit in a batch operation. So, the control means is configured to perform a batch operation to insert the transaction unit group identifier into a plurality of token references, being a stack (the batch).

Here, the control means is configured to obtain the transaction unit group identifier from a local storage unit of the secure transaction unit or to request the transaction unit group identifier from the service provider unit in case this transaction unit group identifier is not permanently stored in a storage unit of the secure transaction unit.

The means for transmitting the one or more registration requests may be configured to forward the registration request with one or more token references not having transaction unit group identifiers to an electronic terminal device that is assigned to the secure transaction unit.

The electronic terminal device may be configured to insert the transaction unit group identifier into one of the token references forwarded by the secure transaction unit. So, at least one token reference in the token register contains the transaction unit group identifier as the further token reference element.

It may be that the transaction unit group identifier is inserted into each of the token references forwarded by the secure transaction unit. So, all token reference of this particular transaction unit contains the transaction unit group identifier as the further token reference element and so, these token references are identified as being generated by this transaction unit.

It may be that the transaction unit group identifier is inserted into each of the token references of a specific registration request forwarded by the secure transaction unit. Alternatively, the registration request may contain transaction unit group identifier in each token reference.

It may be that the transaction unit group identifier is inserted into each token reference of a plurality of registration requests, preferably a sequence of registration requests, forwarded by the secure transaction unit in a batch operation. So, the electronic terminal device is configured to perform a batch operation to insert the transaction unit group identifier into a plurality of token references, being a stack (the batch).

The electronic terminal device may be configured to obtain the transaction unit group identifier from a local storage unit of the secure transaction unit or to request the transaction unit group identifier from the service provider unit in case this transaction unit group identifier is not permanently stored in a storage unit of the secure transaction unit.

The electronic terminal device may be configured to retrieve the transaction unit group identifier from a certificate of the service provider unit issuing or managing the secure transaction unit.

The electronic terminal device may be configured to derive the transaction unit group identifier from a transaction unit identifier of the transaction unit.

The means for transmitting the one or more registration requests may be configured to forward the registration request with one or more token references not having transaction unit group identifiers to a service provider unit.

The service provider unit is configured to insert the transaction unit group identifier into one of the token references forwarded by the secure transaction unit. So, at least one token reference in the token register contains the transaction unit group identifier as the further token reference element.

It may be that the transaction unit group identifier is inserted into each of the token references forwarded by the secure transaction unit. So, all token reference of this particular transaction unit contains the transaction unit group identifier as the further token reference element and so, these token references are identified as being generated by this transaction unit.

It may be that the transaction unit group identifier is inserted into each of the token references of a specific registration request forwarded by the secure transaction unit. Alternatively, the registration request may contain transaction unit group identifier in each token reference.

It may be that the transaction unit group identifier is inserted into each token reference of a plurality of registration requests, preferably a sequence of registration requests, forwarded by the secure transaction unit in a batch operation. So, the service provider unit is configured to perform a batch operation to insert the transaction unit group identifier into a plurality of token references, being a stack (the batch).

Here, the service provider unit may be configured to obtain the transaction unit group identifier from its own local storage unit.

The service provider unit to which the token reference(s) are forwarded can issue secure transaction units and/or the token that is assigned to the token reference and/or may be configured to manage the secure transaction unit.

The service provider unit - after having inserted the transaction unit group identifier - may generate a service-provider-unit-replacement-request, short SPU-replacement request (also SPU-registration request) - to register the token reference with the transaction unit group identifier at the token reference register. Since the service provider unit is not in possession or in knowledge of the private key as the token element of the token, it is not possible for the SPU to sign the registration request using this private key. In contrast, the SPU performs the SPU-replacement request, in which a new private key is generated by the SPU and a public key thereof is create (see switch-command in WO 2020 / 212 331 A1 and WO 2020 / 212 331 A1 for greater details). The transaction unit group identifier is inserted in this newly generated token reference (generated by the SPU) and this token reference with the inserted transaction unit group identifier is used in the SPU-replacement request. Since the new private key is known to the SPU, the SPU-replacement request can be signed with the new private key to increase the security of the transaction system.

In an embodiment, the means for transmitting the one or more registration requests is configured to forward the registration request with one or more token references not having transaction unit group identifiers to the token reference register, wherein the token reference register is configured to request an authentication from the service provider unit. Upon successful authentication, the transaction unit group identifier is inserted by the token reference register. During the authentication process, the transaction unit group identifier may be transmitted from the service provider unit to the token reference register.

The secure transaction unit may not be required to be authenticated at the token reference register.

The control means of the secure transaction unit is further configured to generate one or more token references of a registration request based on modification commands (replacement requests) being processed by the secure transaction unit, the modification commands being preferably one or more of a switch-command, a merge-command and a split-command, wherein the modification commands are only performed for tokens having the same token-type information. For further details related to these modification commands it is referred to WO 2020 / 212 331 A1 and WO 2020 / 212 331 A1.

In an embodiment, the secure transaction unit is a secure element that is operatively connected to an electronic terminal device of a participant in the electronic payment system. In an alternative embodiment, the secure transaction unit is a secure wallet that is hosted at a service provider unit.

The control means may be configured to access a token storage, preferably a token storage of the secure transaction unit.

The secure transaction unit may comprise a token storage as a physical entity. The secure transaction unit may be configured to access the token storage. The token storage may be a token vault of this secure transaction unit. Each secure transaction unit in the transaction system may comprise its own token storage.

From such token storage accessible by the secure transaction unit, each token can be transferred to any other secure transaction unit, e.g., owned by a customer of the secure transaction unit.

The secure transaction unit may be a secure wallet that may be a hardware security module built in hardware or software to enable tamperproof and secure access to the tokens.

The service provider unit having a storage unit being configured to store protocol data of one or more payment transactions involving secure transaction units being issued by this particular service provider unit or being managed by this particular service provider unit, wherein the protocol data comprise the one or more token references of the tokens involved in the payment transaction.

The protocol data may be used for a surveillance of payment transactions within the electronic payment transaction system, wherein the protocol data and/or the registration requests comprising the transaction unit group identifier are used for fraud detection. In case, the transaction unit group identifier is not included in the token reference, a comparison between protocol data and registration requests is made and based on a data reduction scheme, the fraud can be detected. So, an efficient and anonymous payment system surveillance system can be achieved.

The protocol data may be used for a conflict resolution in case of a payment transaction error within the electronic payment transaction system using the protocol data and/or the registration requests comprising the transaction unit group identifier. In case, the transaction unit group identifier is not included in the token reference, a comparison between protocol data and registration requests is made and based on a data reduction scheme, the conflict can be detected. So, an efficient and anonymous payment system conflict resolution system can be achieved.

In an embodiment, the transaction unit group identifier is used for a lost-card-recovery, which is a synonym for a broken, malicious, malfunctioning secure transaction unit. The transaction unit group identifier uses the information of the initially loaded new tokens and a recovery may be delayed until a certain waiting period is.

The protocol data is per se independent on the registration requests. This means, offline and online transaction may lead to a token reference register status that is not following the status of the payment system. Using the protocol data with the transaction unit group identifier enables to receive additional information that is more accurate than the token reference register status.

The control means of the service provider unit may be configured to generate a registration request for a switch-command, in which a registered token reference is replaced by a new token reference, wherein the registration request comprises a signature of the service provider unit instead of a signature based on the private key of the token-individual key pair of the token reference. This switch-command may be referred to as a service provider unit replacement request that may be able to trigger a replacement of token references in the token reference register without knowing the private key of the token individual key pair. This request may contain a service provider unit digital signature in the replacement request to exchange the old token reference with the new token reference by performing the switch modification. This switch-modification command may be executed only if the old token reference is valid, a transaction unit group identifier is registered, and the digital signature comes from the service provider unit having the transaction unit group identifier. As an alternative, token may be blocked in the token reference register.

In another aspect of the invention, a token reference register for registering of token of an electronic payment transaction system is provided.

The token reference register comprises one or more storage units for storing token references for registering tokens in the electronic payment transaction system. Each token comprises at least a monetary value and a private key of a token-individual key pair as token elements.

The token reference register further comprises one or more verification units for verifying whether the token reference of a receive registration request is stored in the token reference register. Each token reference may being uniquely assigned to a token.

Each stored token reference in the token reference register comprises the monetary value of the token and a public key corresponding to the private key of the token-individual key pair as a reference.

At least a subgroup of token references in the token reference register further comprises a transaction unit group identifier as a token reference element.

The storage unit is further configured to store token references of modified tokens based on a modification command (as part of a registration request), preferably a switch-command, a merge-command, and/ or a split-command, wherein a token reference of the modification command is stored only in a case all tokens involved in the modification command comprise the same token-type information.

The transaction unit group identifier may be stored as a part of protocol data of a payment transaction in the token reference register.

The token reference register is a unit of the electronic payment transaction system that stores token references, whereby the associated tokens are registered. This token reference register can be a central database or storage unit of the electronic payment transaction system. This token reference register may be a decentralized ledger, for example in a blockchain topology. The token reference register may maintain a history of token references and/or registration requests.

The verifying unit is configured to reject a registration request which comprises token references with different token-type information.

The basic principle of registering a token is that a received registration request is verified by the token reference register to see whether the token reference assigned to the token is already known in the token reference register. If the token reference is already known, it is not stored again. If the token reference is not known, it is entered (stored) in the token reference register to be available for future verification and check steps in the secure payment transaction system.

A token reference is stored only once in the token reference register. Since a token reference of a token exists only once in the transaction system, the verifying unit can determine whether an attempt was made to spend a token more than once.

The token reference comprises the monetary value of the uniquely assigned token. This monetary value can be used to further validate the registration request at the token reference register. Hence, the token reference may comprise the hash value and the monetary value as token reference (data) elements. In embodiments the hash value may be directly computed from the private and/or public key of the token-individual key pair as well as the monetary value.

In preferred embodiments the registration request could be an addition request from a secure token issuing unit of a token issuer of the transaction system, requesting the addition of the token reference of a new token to the token reference register. In the system only the token issuer may add and/or delete token references to/from the token reference register. The registration request could be a replacement registration request from a transaction unit of the transaction system, requesting at least one input token reference stored in the token reference register to be replaced in the token reference register by the at least one (output) token reference to be stored. The replacement registration request may comprise m input token references and n output token references (m, n = 1, 2, ...).

In addition to the token reference(s), which comprise the (respective) hash value but do not comprise the (respective) public key of the token-individual key pair of the token, the received registration request may comprise one or more further token reference(s), preferably input token references, assigned to further token(s). The further token reference(s) comprise a public key of an token-individual key pair of the further token(s). The public key of the token-individual key pair allows the token reference register, in particular the verifier unit, to verify a signature created by the secret key of the token-individual key pair. Preferably, the public key is included only in (input) token reference(s) of the registration request for token reference(s) to be deleted. Again, in contrast thereto, output token reference(s) to be stored in the token reference register do not include the public key.

Preferably, in the verifying step it is verified whether the at least one token reference of the received registration request is not stored in the storage unit of the token reference register and/or if an input token reference of the received registration request is stored in the storage unit of the token reference register. Furthermore or alternatively the verifying step may comprise verifying whether the registration request is not already stored in an archive of previous registration requests of the token reference register. Preferably, each registration request processed in the token register, in particular registration requests for which the storing step in the storage unit was performed, will be stored in the archive of previous registration requests.

One aspect of registering a token is that a received registration request is verified to see whether the token reference assigned to the token and/or the registration request is already known in the token reference register. If the token reference and/or the registration request are already known, the token reference is not stored. If the token reference (and the registration request) is not known, it is entered (stored) in the token reference register to be available for future use (verification and check steps) in the secure payment transaction system.

It may additionally or alternatively be determined by the verifying unit of the token reference register whether the received registration request as such is (syntactically) correct. The step of verifying the correctness of the received registration request is preferably performed prior to verifying the criteria in the token register.

Verifying the correctness of the received registration request, preferably comprises one or more of the following substeps:
for each input/ further token reference in the received replacement registration request, the input/ further token reference being assigned to an input/ further token, verifying whether a signature in the registration request was created by the private key of the respective input/ further token; and/or
for each input/further token reference in the received replacement registration request verifying whether the hash value of the input/further token reference can be rederived from the public key included in the received replacement registration request; and/or
Verifying whether the received replacement registration request is value-neutral, by comparing the monetary value of (all) input token reference(s) and the monetary value of (all) output token reference(s) of the replacement registration request; and/or
Verifying whether the addition registration request is signed by a secure token issuing unit.

The monetary values can be e.g. compared by adding the monetary values and comparing both results (of input/output token reference(s)) or by subtracting the respective monetary value(s) (of input/output token reference(s)) and the result comparing to zero.

In the verifying step, a public key (of input token reference(s)) of the received registration request may be used to calculate the corresponding hash value for verifying whether the public key in the request corresponds to the hash value in the request and/or for verifying whether a token reference comprising the hash value is (still) stored in the token reference register (and thus can be deleted).

In one embodiment, the verifying unit is configured to determine whether a signature of the registration request is correct.

In a further aspect there is provided an electronic payment transaction system that comprises: a secure token issuing unit that comprises a minting unit configured to generate a new token to be issued in the electronic transaction system; and a melting unit configured to delete tokens to be deleted from the electronic transaction system; a plurality of secure transaction units as described above; one or more token register for registering the tokens of the electronic transaction system as described above; and one or more protocol data register for storing protocol data of payment transactions between secure transaction units.

An archive of previous registration requests could be used to verify, whether the (current) registration requests has been successfully processed (token references stored) already. In such cases where a processed registration requests is received a second or third time, it will not be processed anymore.

In a further aspect there is provided a method for registering of token using a secure transaction unit as described above.

The use of a token reference is not comparable to the use of addresses of subscriber entities in a blockchain-based transaction system, as no addresses of subscriber entities are used in the token reference register according to the invention to prevent traceability of the tokens.

In one embodiment, the received registration request is signed with the private key of the token-individual key pair to be able to check or verify a unique assignment of the token reference to the token. If the verification in the verifying unit is successful, i.e., the signature can be verified, then the sender of the registration request must be in possession of or must be aware of the token. This makes it possible to detect a fraud attempt with non-existent tokens or unauthorized generated tokens.

The use of multiple verification units enables parallel processing of registration requests and speeds up registration in the transaction system. The verification unit(s) compares, for example, a command type of the received registration request with the token values of the received registration request. If a command type is expected not to add token values to or subtract token values from the transaction system, it verifies that this is met with the token values of the received token references. If verification fails, fraud is detected, and a (wrong) registration is prevented.

Each combination and also the insertion as named herein may be referred to as a concatenation, which is a logical combination used in information technology.

Each token comprises a monetary value as a first token element. The monetary value may be a data that represents money usable in one or more electronic payment transaction.

Each token further comprises a private key as a second token element. The private key may be referred to as a blinding value (e.g. obfuscation amount) or may be a random number or may be a secret that is not known to participants not involved in a transaction. The private key may be a private key of a token-individual key pair.

In addition, each token may have further token elements as outlined below and may also have further token elements such as further metadata, e.g., currency data that indicates the currency which the monetary amount represents and/or validity data and/or timestamp data. Token of different token-type may have the same currency data, thus they may belong to the same currency.

The token may also be referred to as value note within this disclosure. The token can be used in online and offline payment transactions. The token may represent central bank digital currency, CBDC.

The token may comprise one or more token-individual history entries as a further token element. One history entry may represent one modification, such as SWITCH, SPLIT, MERGE, performed with this token. Such a further token element may also be referred to as history data.

It is possible to use tokens exclusively in offline electronic payment transactions between two directly communicating secure token managing units (e.g., secure elements) within the electronic payment transaction system.

An online electronic payment transaction payment is defined herein as a transaction in which a secure wallet (e.g. in a secure element) that participates in the transaction, e.g. the secure wallet that initiates the token transfer (payer) or the secure wallet that receives a token (payee), has access and can communicate with one or more remote instances of the electronic payment system, such as a token register, a transaction register, a token issuing unit, a service provider unit such as financial service provider (FSP) via classical internet or mobile communication means or any other suitable online communication protocol. So, immediately before, while or after performing the transaction, also a registration of the transaction by storing a respective token reference in a remote token register is performed by one of the secure wallets involved in the transaction.

An offline electronic payment transaction payment is defined herein as a direct transaction between two secure wallets (e.g. residing in secure elements) that participate in the transaction, e.g. the secure wallet that initiates the token transfer (payer) and/or the secure wallet that receives a token (payee). At least one of payer or payee has no access and cannot communicate with remote instances of the transaction system, such as a token register, a transaction register, a token issuing unit and/or a service provider unit, such as financial service provider (FSP) via classical internet or mobile communication means. The token transfer may then take place by local wireless communication means, such as Bluetooth, NFC, or any other suitable wireless communication protocol. The token transfer may also take place by contact-based communication means, such as USB, ISO 7816, or any other suitable contact-based communication protocol.

For a registration of a token in the token register, a token reference of the token may be generated. Each token reference comprises a hash value as a token reference element and may further have the monetary value of the token as another token reference element.

A token "managed by" a token transaction unit, such as the above-described secure wallets, is a token that resides in a memory (storage) space. The memory space can be an internal memory space of the token management unit, or it can be an external memory space to which the token management unit has exclusive access rights. This memory space can include a remote memory space, such as a cloud memory (storage) space.

Implementation of modifications to tokens can be performed with the known payment transactions of WO 2020/212 337 A1; WO 2020/212 331 A1; WO 2021 /170 646 A1 and WO 2021 / 170 645 A1 protocols.

A corresponding token reference is (uniquely) associated with each token in the method and payment transaction system. Knowledge of a token reference does not authorize issuing of the digital money represented by the token. This represents a key difference between token references and tokens. A token reference is unique and also uniquely associated with one token, so there is a 1-to-1 relationship between the token and the token reference. The token reference can be computed by each participant, such as a secure wallet (e.g. in a secure element) of a participant in the electronic payment system. The computing is preferably performed by the control means.

In the following, the invention or further embodiments and advantages of the invention are explained in more detail based on drawings, wherein the drawings describe only embodiments of the invention. Identical components in the drawings are given the same reference signs. Elements drawn with dashed lines are considered as optional elements.

The drawings are not to be regarded as true to scale, and individual elements of the drawings may be shown in exaggeratedly large or exaggeratedly simplified form.
Fig. 1 shows an exemplary embodiment of a secure electronic payment transaction system for token transactions according to the invention.
Fig. 2 shows another exemplary embodiment of a secure electronic payment transaction system for token transactions according to the invention.
Fig. 3 shows another exemplary embodiment of a secure electronic payment transaction system for token transactions according to the invention.

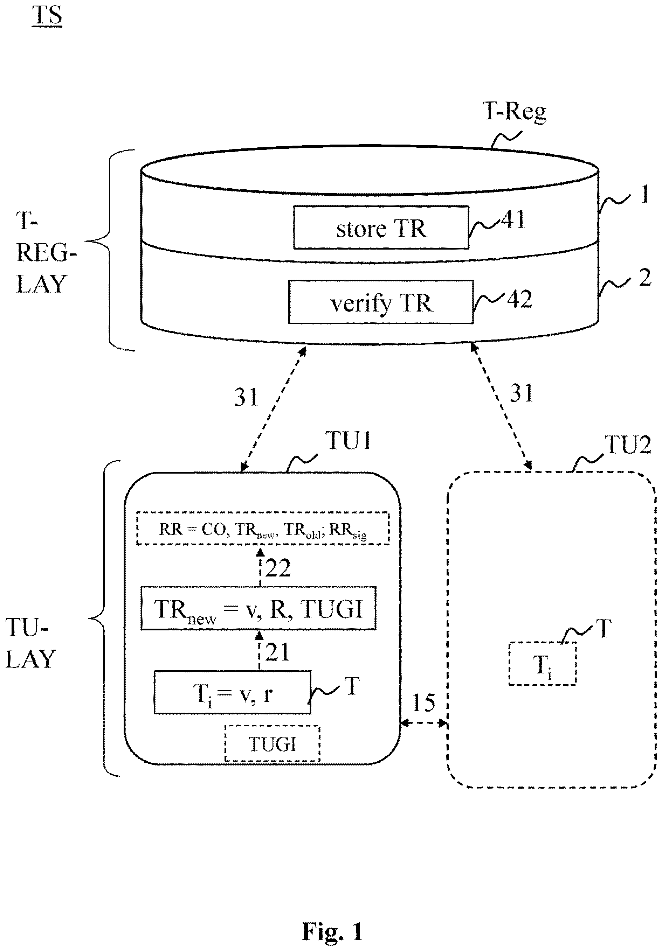

Fig. 1 shows an embodiment example of a secure electronic payment transaction system TS according to the invention. The transaction system TS comprises a register layer T-REG-LAY in which a token reference register T-Reg is arranged. The TS further comprises a direct transaction layer TU-LAY in which a plurality of transaction units TU may be provided, as an example, two transaction units TU1 and TU2 are shown in Fig. 1.

The transaction units TU of the transaction system TS are arranged to exchange 15 tokens T directly with each other. In the case of Fig. 1, the tokens T are payment tokens, which are also referred to as digital coins. Each token T is issued by a transaction unit TU-I of a an token issuer (not shown in Fig. 1).

Each token T can be modified, such as split, merged or switched, by applying modification-commands by each transaction unit TU. Each token T can be generated by a transaction unit TUI of the token issuer and can also be deleted. These modifications are compliant with the above described third approach and it is refrained from repeating these modifications here again. Each modification can be registered in the T-Reg by replacement requests (registration commands). A transaction unit TU-I of the token issuer is, for example, a commercial bank.

A token T is uniquely represented by a monetary value v as well as a random number r. Thus, each token T in this TS has at least two token elements.

The monetary value v as a first mandatory token element can be specified in a range of values from 1 to 2³¹-1. The random number r may be a number in the range of 0 to 2²⁵⁶ - 1, i.e., the order of an elliptic curve, for example secp256r1. For example, the token value v is a 32-bit token element of type integer.

The random number r as a second mandatory token element is a private key of a token-individual key pair. The random number r is unique and secret in the transaction system TS and may not be published or reused. The generation of the random number r must be unpredictable. For example, the random number r is a 32-Byte token element of type integer.

A transaction unit TU has exclusive access to a storage unit (vault) or includes a token memory in a data store of the transaction units TU.

A token T may be stored as a TLV encoded record in a token store and then has a unique tag and length information, for example, in the following format.

For each token T, a token reference TR can be stored in the token reference register T-Reg. The token reference TR is stored in a token reference register T-Reg to register the uniquely assigned token T. The token reference TR comprises a reference, for instance a public key R that corresponds to the private key r of the token-individual key pair. Using the token-individual key pair allows the unique assignment between token T and token reference TR. The token reference may also comprise the monetary value v (of the token T).

At least a subset (subgroup) of the TR also comprise a transaction unit group identifier TUGI. The token reference TR of the token T can be viewed at any time in the register T-Reg of the transaction system TS.

This token reference TR can be sent 31 to the token reference register T-Reg in form of a registration request RR (being generated in step 22), if necessary, together with a modification command regarding the token T.

If the token reference TR is sent 31 to the token reference register T-Reg, a control means of the TU may insert the TUGI. The TUGI may be inserted in just one of the TR that are part of a RR or it can be inserted in all TR that are generated by this particular TU.

The insertion of the TUGI can also be delegated to an electronic device that incorporates the TU or that is assigned to the TU, such as a smart phone or the like. In such a case, the TR is forwarded by transmitting means of the TU to the electronic device. The electronic device inserts the TUGI into the TR.

Additionally, the registration request RR can be signed with the private key r. Signing makes it possible to verify that the sender of the token reference TR was in possession of the token T, further enhancing security in the transaction system TS.

The registration request RR related to switch, split and merge modification may include the modification command CO, a new token reference TR_{new} of a token T to be registered and an old token reference TR_{old} of a token T to be removed from the token reference register T-Reg. The registration request RR may also comprise a signed registration request RR_{sig}, which is the RR signed with the private part r of the new token T.

In the transaction unit TU, the signed registration request RR_sig may be stored as a so-called PROOF.

This registration request RR can be sent 31 to the token reference register T-Reg. This registration request RR is received in the token reference register T-Reg. After the registration request RR has been checked by the token reference register T-Reg, the token reference TR is stored in the token reference register T-Reg, whereby the token T is registered in the transaction system TS and an old token reference TR is deleted from the token reference register T-Reg.

The TUGI is not a token element, so the tokens T used for payment transactions in the TS remain the same. However, for registering the tokens T, the token reference TR is enhanced with the TUGI as a new token reference element.

The TUGI is used as an element within the reference R to protocol the transaction that was made with this transaction unit.

The TUGI as part of the TR has no influence when registering the token T in the token reference register T-Reg. In other words: The TUGI is ignored by the T-Reg when registering the token T by storing TR in the storage unit 41 and also when verifying replacement requests RR (registration requests) including switch, merge, split commands.

The RR has an input TR (here TR_{old}) that do not have TUGI and has an output TR (here TR_{new}) to which the TU inserts the TUGI as another element. The inserting may be made for protocolling the payment transaction. The TUGI may later be used in the event of a destroyed or malfunctioned or a stolen transaction unit TU.

A token reference TR is uniquely assigned to the token T, here TR_{new} is assigned to token Tᵢ, and is used to register the token Tᵢ in the transaction system TS.

The token reference TR is therefore the public representation of the token T from the direct transaction layer TU-LAY. Sole knowledge or possession of the token reference TR alone does not allow the token T to be transferred and is not equivalent to the TU being in possession of the token T. The token reference TR is used to prevent multiple spending attempts and checks whether token values v have been generated in an improper manner. Therefore, the token reference TR and, if applicable, the history about the tokens T and the corresponding registration requests RR from TU(s) are stored in the token reference register T-Reg.

The tokens T are stored, for example, in a secure wallet, as the TU. These wallets are, for example, software applications within the electronic terminal device in which the TU is operationally embedded. A wallet may be set up as an application on a smartphone, smart card or payment terminal. The wallet is used to securely manage tokens T of the TU, generate token references TR, modify tokens T, and/or exchange tokens T. Wallets are used to communicate with the token reference register T-Reg, generate registration requests RR to the token reference register T-Reg, modify tokens T (switch, merge, split) and/or perform transaction of token T to another TU.

A transaction with a TU does not require a communication link to the token reference register T-Reg of the transaction system TS. The transaction system TS is set up to perform a transaction offline, i.e., without a communication link to the token reference register T-Reg. A corresponding registration of token T may therefore be temporally downstream of a transfer of token T to a TU.

The token reference register T-Reg is a unit of the transaction system TS and is either a central register or database of the transaction system TS or a decentralized register or database (DLT) of the transaction system TS.

The reference, e.g. the public part R of the token individual key pair is generated by applying a cryptographic function to the private part r of the token individual key pair. This function is difficult to reverse and thus provides the transaction system TS with the required security. It holds that R = r * G, where G can be, for example, a global parameter of the transaction system TS, e.g., a generator point of an elliptic curve, here the secp256r1 curve. Any other suitable cryptographic function to receive the R value can be applied as well.

The TU1 and TU2 may be issued or operated by a service provider unit SPU1 and so, the TUGI of TU1 and TU2 may be an identifier to uniquely identify SPU1.

Alternatively, the TU2 may be issued or operated by a service provider unit SPU2 that is different from SPU1 and so, the TUGI of TU2 may be different from the TUGI of TU1 as an identifier to uniquely identify SPU2.

The T being transferred 15 between TU1 and TU2 does not comprise the TUGI. However, the TR_{new} being transferred 31 to the T-Reg with the RR does comprise the TUGI. So, it is possible to include a fraud detection, a surveillance system and a lost-card-recovery system without decreasing anonymity within the TS.

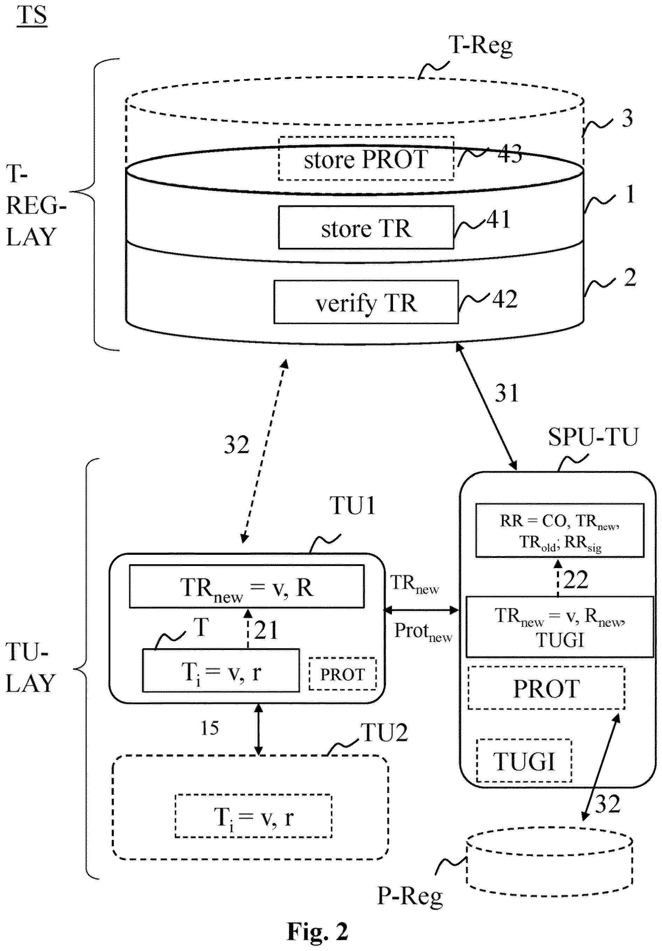

Fig. 2 shows another exemplary embodiment of a token reference register T-Reg of the invention.

Here, a TU2 may transfer T to TU1. TU2 is operated by SPU2 (not shown) and TU1 is operated by SPU1, the TU of SPU1 is shown in Fig. 2 as SPU-TU.

The token T transferred 15 between TU2 and TU1 is received at TU1 during a payment transaction. TU1 now generates a TR_{new} in step 21 as known from WO 2020 / 212 331 A1 and WO 2020 / 212 331 A1 and it is not further repeated here.

The payment transaction between TU1 and TU2 may be protocolled with protocol data PROT. The PROT may include the TUGI of the TU1 and this PROT may be provide 32 to the T-Reg and may be stored there. The PROT may include a timestamp of the transaction of T between TU1 and TU2 and the TR_{old} and the TR_{new}.

More preferred, the TR_{new} (and TR_{old}) is transmitted from TU1 to SPU-TU. The SPU inserts the TUGI only in the TR_{new}. After having inserted the TUGI, the SPU generates a SPU-replacement-request (also SPU-registration request) - to register the new token reference TR_{new} with the TUGI at the T-Reg. Since the SPU is not in possession or in knowledge of the private key r as the token element of the token T, it is not possible for the SPU to sign the RR using this private key r of that T. In contrast, the SPU performs the SPU-replacement request, in which a new private key is generated by the SPU and a R_{new} thereof is create (see switch-command in WO 2020 / 212 331 A1 and WO 2020 / 212 331 A1 for greater details). The TUGI is inserted in this newly generated TR_{new} (generated by the SPU) and this TR_{new} with the inserted TUGI is used in the SPU-replacement request. Since the new private key r_{new} is known to the SPU, the SPU-replacement request can be signed with the new private key r_{new} to increase the security of the TS.

In the SPU-TU, the TUGI from SPU1 is inserted in the TR_{new} as a further token reference element. Subsequently, the RR for the switch-command together with RR_{sig} is sent 31 to the T-Reg. In addition, PROT may be sent 32 to the T-Reg if the PROT are centrally stored there. Alternatively, a distinct central storage P-Reg is used to store the PROT.

The PROT may be generated per each payment transaction in which T is transferred in the TU-LAY. The PROT may include one or more data fields. PROT are provided in one of the following formats:
PROT = (wID1, wID2, TR_{new})
PROT = (wID1, wID2, TR_{new}, TR_{old})
PROT = (wID1, wID2, v)
PROT = (hash(wID1), hash(wID2), v)
PROT = (hash(wID1), (hash(wID2), TR_{new}, TR_{old})

The wID1 is a unique identifier of the TU1. The wID2 is a unique identifier of the TU2. Instead of the wID, a hash function may be applied on the wID and only the resulting hash value may be inserted into the PROT.

In addition, a transaction number may be inserted in the PROT as well. One or more of the data fields of the PROT may be encrypted to increase the security within the TS.

Furthermore, T-Reg manages the storage location for the token references TR, shown here as database 1 as an example of a storage unit 1 in the token reference register T-Reg. As a representative example, the TR for the token T of the SPU-TU is entered in the database 1 upon replacement request 31. The replacement request 31 now comprises TR that includes TUGI as a further token reference element. Instead of inserting the TUGI by the TU1 as shown in Fig. 1, the TUGI is inserted in the SPU-TU in Fig. 2.

This database 1 may consist of an association of many databases which are interconnected.

In addition, the token reference register T-Reg may include at least one verification unit (=verifying unit) 2. The verification unit 2 of the token reference register T-Reg verifies registration requests RR. Thereby, a syntactical correctness or also the correct specification of a command in the registration request RR can be verified. Also, a history from old (past) registration requests RR concerning a token T can be verified. The separation of this verification unit 2 from the database 1 distributes the tasks of filing and checking and increases the speed in the token reference register T-Reg.

A registration request RR is preferably signed with the private part r. The signature allows a syntactic authenticity of the command to be easily checked by the receiver (T-Reg or the TU). This verification is preferably performed in the database 1 or the verification unit 2. Furthermore, a register request RR can be syntactically validated, for example, by checking the signature and/or the token reference TR.

Even though a signature may be checked in a TU, this does not ensure that multiple issuances of the same token T have not been attempted. Therefore, registration in the token reference register T-Reg is provided. In addition, a secure hardware platform is maintained by the TU. With available connection to the token reference register T-Reg, the token references TR are transmitted, and the multiple issuance attempt can be detected in the token reference register T-Reg.

If a token reference TR is not yet known in the token reference register T-Reg, it is added.

The commands CO used for RR can be modifications of an existing token T, for example "switch", "split" or "merge" that are used in replacement requests 31. The commands "switch", "merge" and "split" can be integrated into replacement requests (registration requests RR) to register a modification of a token T at the T-Reg.

The RR may also include a signed registration request RR_{sig}. So, each registration request RR also has a signature to show that the TU is in possession of the associated token T. An ECDSA scheme can be applied as signature. The registration request RR is preferably signed with the private part r of the token T. As expressed earlier, the command types CO "Create", "Delete", "Split", "Switch" and "Merge" can be studied in WO 2020 / 212 331 A1 and WO 2020 / 212 331 A1 and it is avoided to repeat the functions or structure thereof.

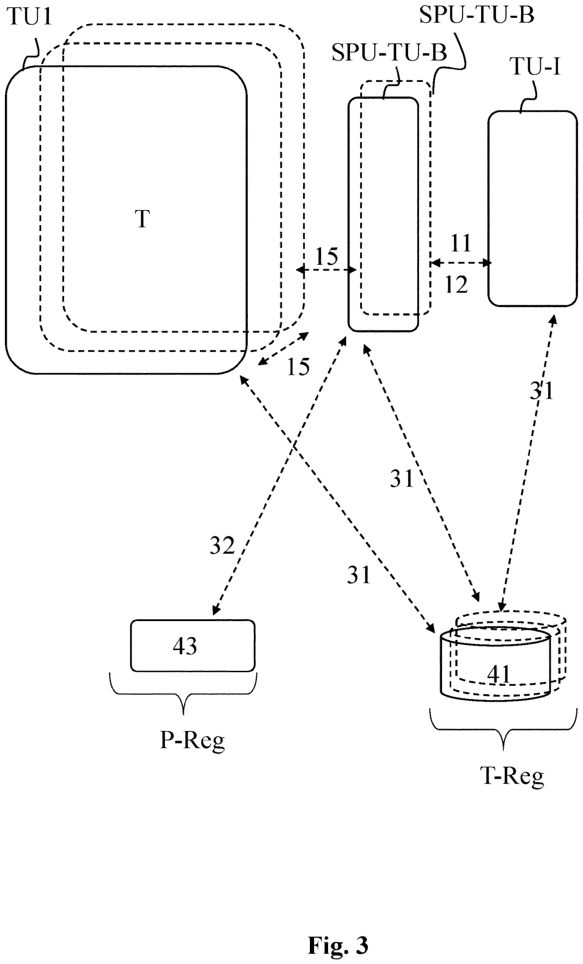

Fig. 3 shows another embodiment of a token reference register T-Reg of a transaction system TS.

In Fig. 3, it is indicated that a plurality of transaction units TU of service provider units SPU-A and SPU-B (here referred to as SPU-TU-A and SPU-TU-B) can be existing in the TS. These SPU-TU-A and SPU-TU-B may receive new tokens T from a token issuer TU-I e.g., a central bank. Tokens may be newly issued 11 or deleted 12.

These new tokens may be issued to the intermediate issuers, such as commercial banks SPU-A and SPU-B. These tokens may be used in direct token exchange 15 with costumers of the intermediate issuers SPU-A and SPU-B. The token exchange 15 is also performed between TUs, e.g. between TU1 and TU2 as shown and described in Figs. 1 and 2.

In Fig. 3 it is shown that a plurality of storage units may be provided in the token reference register T-Reg to accelerate the storing 41 of a plurality of token references TR. As expressed earlier, the TR in the T-Reg may include TUGI that are inserted by the SPU-TUx or the TU itself.

In another embodiment, the TR are sent 31 to the T-Reg from the TU or the SPU-TU. Upon authentication of TU or SPU-TU, the TUGI is inserted into a respective TR. A TU may not need an authentication at the T-Reg.

In Fig. 3 it is also shown that a P-Reg is used to store 43 PROT. These PROT may be used together with the RR in the T-Reg to enable a surveillance system, and/or an error recovery and/or a lost-card-recovery as shortly outlined in the following.

A surveillance system and or an error recovery may be established to detect a fraud, or an error as follows. The PROT increase the accuracy of the transaction history, because a T-Reg may not be up to date in case, a plurality of offline transactions occurs in the TU-LAY without any registration request for a certain time period. So, in case a fraud detection should be possible, the T-Reg data, especially the TR registered in the T-Reg are now compared with the PROT data and it may be discovered that new money was created by fraud, or a token was spent more than once (double spending attack).

For a lost-card-recovery, which is synonymous for an unreachable TU or a malfunctioning TU, PROT and T-Reg data may now be used to set up the initial status of the malfunctioning or lost TU. It is recommended to wait a period of time before recovering the TU, because there may be offline transactions with tokens T of the malfunctioning or lost TU that are not registered in the T-Reg.

In addition, the link between a TU and its SPU-TU may be encrypted and may in addition include a mutual authentication before PROT or TR are transferred. In addition, the link between a T-Reg and a SPU-TU may be encrypted and may in addition include a mutual authentication before PROT or TR are transferred. None of these encryptions or authentications risks the anonymity of the entire transaction system TS.

It is further important to mention that the RR sent by the SPU-TUx can be handled in a batch operation. So, a plurality of RR (or TR) may be received by the SPU-TU and at a certain time of the day, e.g. a predefined time, such as 12a.m. or when a certain number of RR (or TR) is received at the SPU-TU, the SPU-TU inserts the TUGI to the entire batch and sends 31 the RRs in a batch operation to the T-Reg.

Such a batch operation can be performed for only a single TU, such as all RR in TU1 are handled as a batch operation.

Such a batch operation can be performed for a plurality of TUs, such as all RR in TU1 and TU2 are handled as a batch operation.

### REFERENCE SIGNS

- TS: Electronic (payment) transaction system
- TU: Transaction unit in TS, wallet
- TU-I: Transaction unit of a token issuer, central bank wallet
- SPU: Service Provider Unit, FSP)
- SPU-TU: Transaction unit of SPU, SPU-wallet
- T-Reg: Token Register
- 1: Storage unit
- 2: Verifying unit
- 3: Store TUGI
- T-Reg-LAY: Token registration layer
- TU-LAY: Token transfer layer
- RR: Registration request, replacement request
- T: Token
- TR: Token reference
- v: Monetary value of T
- r: Secret, private key of token-individual key pair
- TUGI: transaction unit group identifier
- R: public key of token-individual key pair
- CO: Command
- RR_{sig}: signed RR
- wIDx: TU identifier of TU x
- hash: hash value
- 11: new token issued
- 12: old tokens deleted
- 14: negotiate token-type
- 15: transfer of token
- 16: Transfer of token reference
- 21: Derive token reference
- 22: Generate RR
- 31: registration request, replacement request
- 32: protocol data request
- 41: Store TR
- 42: Verify TR
- 43: Store protocol data

## Claims

1. A secure transaction unit (TU) for managing payment transactions in an electronic payment transaction system (TS), the secure transaction unit (TU) comprising:
- means for receiving and transmitting one or more tokens (T) to one or more other secure transaction unit (TU) in the electronic payment transaction system (TS) to cause an exchange of the one or more tokens (T) between secure transaction units (TU) in the electronic transaction system (TS), wherein each token (T) comprises at least a monetary value (v) and a private key (r) of a token-individual key pair;
- means for transmitting one or more registration requests (RR) to a token reference register (T-Reg) of the electronic transaction system (TS), wherein each registration request (RR) comprises one or more token references (TR) to be stored in the token reference register (T-Reg), each token reference (TR) being uniquely assigned to a token (T) in the electronic payment transaction system (TS);
- wherein one or more token references (TR) of a registration request (RR) comprises the monetary value (v) of the assigned token (T), a reference, preferably a public key (R) corresponding to the private key (r) of the token-individual key pair, and a transaction unit group identifier (TUGI) as token reference elements.

2. The secure transaction unit (TU) of claim 1, wherein the transaction unit group identifier (TUGI) is configured to uniquely identify an issuer of the secure transaction unit (TU) and/or a service provider unit (SPU) that issued the secure transaction unit (TU) and/or that is configured to operate the secure transaction unit (TU).

3. The secure transaction unit (TU) of claim 1 or 2, wherein the control means is configured to generate one or more of the token references of a registration request (RR) to be transmitted to the token reference register (T-Reg), wherein during generation, the control means is further configured to:
- insert the transaction unit group identifier (TUGI) into one of the token references (TR) generated by the secure transaction unit (TU);
- insert the transaction unit group identifier (TUGI) into each token reference (TR) generated by the secure transaction unit (TU);
- insert the transaction unit group identifier (TUGI) into each token reference (TR) of a generated by the secure transaction unit (TU); and/or
- insert the transaction unit group identifier (TUGI) into each token reference (TR) of a plurality of registration requests (RR), preferably a sequence of registration requests (RR), generated by the secure transaction unit (TU) in a batch operation.

4. The secure transaction unit (TU) according to any of the preceding claims, wherein the means for transmitting the one or more registration requests (RR) is configured to forward the registration request (RR) with one or more token references (TR) not having transaction unit group identifiers (TUGI) to an electronic terminal device that is assigned to the secure transaction unit (TU), wherein the electronic terminal device is configured to:
- insert the transaction unit group identifier (TUGI) into one of the token references (TR) forwarded by the secure transaction unit (TU);
- insert the transaction unit group identifier (TUGI) into each token reference (TR) forwarded by the secure transaction unit (TU);
- insert the transaction unit group identifier (TUGI) into each token reference (TR) of a specific registration request (RR) forwarded by the secure transaction unit (TU); and/ or
- insert the transaction unit group identifier (TUGI) into each token reference (TR) of a plurality of registration requests (RR), preferably a sequence of registration requests (RR), forwarded by the secure transaction unit (TU) in a batch operation.

5. The secure transaction unit (TU) according to any of the preceding claims, wherein the means for transmitting the one or more registration requests (RR) is configured to forward the registration request (RR) with one or more token references (TR) not having transaction unit group identifiers (TUGI) to a service provider unit (SPU), wherein the service provider unit (SPU) is configured to:
- insert the transaction unit group identifier (TUGI) into one of the token references (TR) forwarded by the secure transaction unit (TU);
- insert the transaction unit group identifier (TUGI) into each token reference (TR) forwarded by the secure transaction unit (TU);
- insert the transaction unit group identifier (TUGI) into each token reference (TR) of a specific registration request (RR) forwarded by the secure transaction unit (TU); and/ or
- insert the transaction unit group identifier (TUGI) into each token reference (TR) of a plurality of registration requests (RR), preferably a sequence of registration requests (RR), forwarded by the secure transaction unit (TU) in a batch operation.

6. The secure transaction unit (TU) according to claim 5, wherein the means for transmitting the one or more registration requests (RR) is configured to forward the registration request (RR) with one or more token references (TR) not having transaction unit group identifiers (TUGI) to the token reference register (T-Reg), wherein the token reference register (T-Reg) is configured to request an authentication from the service provider unit (SPU) to insert the transaction unit group identifier (TUGI).

7. The secure transaction unit (TU) according to claim 5 or 6, wherein the service provider unit (SPU) is configured to issue the secure transaction unit (TU) and/or the token (T) that is assigned to the token reference (TR) and/or is configured to manage the secure transaction unit (TU) and/or wherein the service provider unit (SPU) is configured to perform a service provider unit replacement request.

8. The secure transaction unit (TU) according to one of the preceding claims, wherein the secure transaction unit (TU) is a secure element that is operatively connected to an electronic terminal device of a participant in the electronic payment system (TS).

9. The secure transaction unit (TU) according to one of the preceding claims being assigned to a service provider unit (SPU) in the electronic payment transaction system (TS), the service provider unit (SPU) having a storage unit being configured to store protocol data of one or more payment transactions involving secure transaction units (TU) being issued by this particular service provider unit (SPU) or being managed by this particular service provider unit (SPU), wherein the protocol data comprise the one or more token references (TR) of the tokens (T) involved in the payment transaction.

10. The secure transaction unit (TU) according to claim 9, wherein the protocol data are used for a surveillance of payment transactions within the electronic payment transaction system (TS), wherein the protocol data and/or the registration requests comprising the transaction unit group identifier (TUGI) are used for fraud detection.

11. The secure transaction unit (TU) according to claim 9 or 10, wherein the protocol data are used for a conflict resolution in case of a payment transaction error within the electronic payment transaction system (TS) using the protocol data and/or the registration requests comprising the transaction unit group identifier (TUGI).

12. The secure transaction unit (TU) according to one of the claims 9 to 11, wherein the transaction unit group identifier (TUGI) is used for a lost-card-recovery.

13. The secure transaction unit (TU) according to one of the claims 9 to 12, wherein the control means of the service provider unit (SPU) is configured to generate a registration request (RR) for a switch-command, in which a registered token reference (TR) is replaced by a new token reference (TR), wherein the registration request (RR) comprises a signature of the service provider unit (SPU) instead of a signature based on the private key (r) of the token-individual key pair of the token reference (TR).

14. A token reference register (T-Reg) comprising:
- one or more storage units (1) for storing token references (TR) for registering tokens (T) in the electronic payment transaction system (TS), wherein each token (T) comprises at least a monetary value (v) and a private key (r) of a token-individual key pair;
- one or more verifying units (2) for verifying whether the token reference (TR) of a received registration request (RR) is stored in the token reference register (T-Reg), wherein each token reference (TR) being uniquely assigned to a token (T);
- wherein each stored token reference (TR) in the token reference register (T-Reg) comprises the monetary value (v) of the token (T) and a public key (R) corresponding to the private key (r) of the token-individual key pair;
- wherein at least a subgroup of token references (TR) in the token reference register (T-Reg) further comprises a transaction unit group identifier (TUGI) as a token reference element.

15. The token reference register (T-Reg) according to claim 14, wherein the transaction unit group identifier (TUGI) is stored as a part of protocol data of a payment transaction in the token reference register (T-Reg).

16. An electronic payment transaction system (TS) comprising:
a secure token issuing unit (CB) comprising:
- a minting unit (MU) configured to generate a new token to be issued in the electronic transaction system (TS); and
- a melting unit configured to delete tokens to be deleted from the electronic transaction system (TS);
- a plurality of secure transaction units (TU) according to one of the claims 1 to 13; and
- one or more token register (T-Reg) for registering the tokens (T) of the electronic transaction system (TS) according to one of the claims 14 or 15;
- one or more protocol data register (P-Reg) for storing protocol data of payment transactions between secure transaction units (TU).

17. A method for registering of token (T) using a secure transaction unit (TU) according to one of the claims 1 to 13.
